# EUROPEAN PATENT APPLICATION

(11) **EP 4 064 023 A1**
(43) Date of publication of application: **28.09.2022**
(21) Application number: 22164358.8
(22) Date of filing: 25.03.2022
(51) Int. Cl.: G06F 3/06

(54) **NEAR-DATA PROCESSING IN SHARDED STORAGE ENVIRONMENTS**

(30) Priority: 26.03.2021 US 202163166364 P; 24.03.2022 US 202217703245
(71) Applicant: INTEL Corporation, Santa Clara, CA 95054 (US)
(72) Inventor: ADAMS, Ian F., Astoria, 97103 (US); MESNIER, Michael P., Scappoose, 97056 (US); AGRAWAL, Neha, Hillsboro, 97123 (US)
(74) Representative: Maiwald Patent- und Rechtsanwaltsgesellschaft mbH

(57) **Abstract**

In one embodiment, a device includes interface circuitry and processing circuitry. The interface circuitry communicates with a plurality of storage devices associated with a storage system. The processing circuitry receives a request to write a data object to the storage system. The data object includes a set of data elements, and the storage system is organized into blocks and shards, which are distributed across the storage devices. The processing circuitry determines a storage layout for the data object, which arranges the set of data elements across a set of blocks and shards with padding to align each data element within block and shard boundaries. The processing circuitry writes the data object to the storage system based on the storage layout.

## Description

### CROSS-REFERENCE TO RELATED APPLICATION

This patent application claims the benefit of the filing date of U.S. Provisional Patent Application Serial No. 63/166,364, filed on March 26, 2021, and entitled "NEAR-DATA PROCESSING IN SHARDED STORAGE ENVIRONMENTS," the contents of which are hereby expressly incorporated by reference.

### FIELD OF THE SPECIFICATION

This disclosure relates in general to the field of data storage systems, and more particularly, though not exclusively, to near-data processing in sharded storage environments.

### BACKGROUND

Due to the rapidly increasing capacity of modern storage systems, near-data processing (NDP) techniques are crucial to accessing and operating on stored data in an efficient manner. In many cases, however, these storage systems erasure code data across multiple "shards," which may be stored in different locations on the same storage device or even on different storage devices, servers, and/or data centers altogether. As a result, the data required for a particular NDP operation may need to be read from multiple shards and then reconstructed before the operation can be performed, which increases the complexity of the NDP operation and reduces its performance benefits.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIG. 1** illustrates an example embodiment of a storage system for performing near-data processing (NDP) on sharded data.
**FIG. 2** illustrates an example of a packed object stored across multiple shards with data elements that cross shard boundaries.
**FIG. 3** illustrates an example of an object stored across multiple blocks and shards.
**FIGS. 4A****-B** illustrate examples of storing an object without alignment padding and with alignment padding.
**FIG. 5** illustrates an example process flow for writing the remaining data elements of an object into the last block using a dynamic block size.
**FIG. 6** illustrates a flowchart for writing a data object to a file system with alignment padding
**FIG. 7** illustrates an overview of an edge cloud configuration for edge computing.
**FIG. 8** illustrates operational layers among endpoints, an edge cloud, and cloud computing environments.
**FIG. 9** illustrates an example approach for networking and services in an edge computing system.
**FIG. 10A** provides an overview of example components for compute deployed at a compute node in an edge computing system.
**FIG. 10B** provides a further overview of example components within a computing device in an edge computing system.
**FIG. 11** illustrates an example software distribution platform.

### EMBODIMENTS OF THE DISCLOSURE

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

### Near-Data Processing in Sharded Storage Environments

For purposes of this disclosure, a data object may refer to any logical unit of data that contains one or more data elements. Moreover, a data element may refer to the smallest unit of data within an object that can be individually processed for a particular application or use case. Examples of data objects and their corresponding data elements include: (i) a plaintext file containing a collection of words; (ii) a comma-separated values (CSV) file containing a collection of CSV records; (iii) a video stream containing a collection of frames; (iv) an image set containing a collection of images; and (v) any other type of dataset containing a collection of data points or values. Moreover, in some storage systems, when a data object is stored, its underlying data elements may be written into blocks, the blocks may be sharded into subblocks (e.g., via erasure coding), the subblocks may be stored within shards (e.g., with each shard stored on an individual storage device), and the shards may collectively form one or more "parts" of the data object.

Modern storage system deployments are now reaching up to exabyte scales, even outside the context of super-computing applications, which presents various challenges with respect to efficiently accessing and operating on the stored data. For example, an exabyte storage system with a 100 Gigabit link would take years to read end-to-end. Even with terabit speed links, the data movement problem is still severe, requiring weeks to months to scan a stored dataset. This makes near-data processing (NDP) and computational storage techniques crucial at the scale of these modern data storage systems.

Adding to these challenges, modern distributed storage systems "shard" and "stripe" data across multiple distinct locations, such as across drives, servers, and even multiple data centers. While this can improve efficiency and reliability by enabling independent failure domains across erasure-coded data as well as parallel reads, it can make near-data processing very difficult, as these shards do not respect data element boundaries. For example, a set of images uploaded together as a single object to a distributed system may be sharded across many locations, and if an image is not completely resident in a single shard, it has to be reconstructed before it can be processed (e.g., by reading image data from multiple shards and reassembling the image).

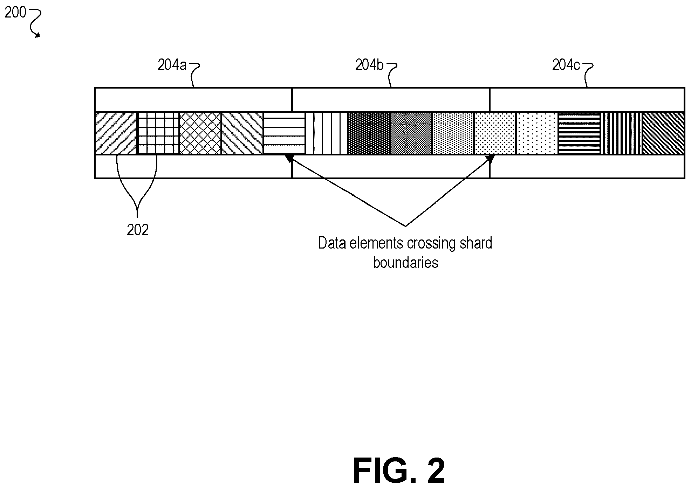

An example of this problem is shown in **FIG. 2**, which illustrates a packed object 200 containing a collection of data elements 202, such as an image set containing a collection of images, a comma-separated values (CSV) file containing a collection of CSV records, and so forth. In the illustrated example, the data elements 202 of the object 200 are stored across multiple shards 204a-c, with certain data elements 202 crossing over the shard boundaries. This boundary crossing adds significant complexity and efficiency costs when the data needs to be processed.

For data storage systems with fixed-size blocks (e.g., Apache Hadoop Distributed File System (HDFS)), it is relatively straightforward to preprocess the data elements of an object (e.g., images in an image set, records in a CSV file) to ensure those elements are aligned within the boundaries of the respective blocks and shards (e.g., using padding and adjusted data layouts).

However, many object storage systems (e.g., MinIO, Swift) not only have maximum or variable erasure-coded block sizes, but they also allow objects to be uploaded in distinct "parts," which results in complex data storage environments where shard boundaries are neither fixed nor trivial to predict. This either makes NDP programming more difficult by requiring much more data awareness in the NDP functions (e.g., recognizing when a data element crosses a shard boundary, methods for reconstruction, deciding where the reconstructed piece is computed on, collating results at multiple layers, etc.), or it requires full reconstruction of shards, which eliminates many of the benefits of NDP, as the data must be moved in order to be collated and reconstructed.

Without a solution to this data fragmentation problem, NDP has very limited practical applications in sharded storage environments where block sizes and shard layouts are determined dynamically rather than statically. No existing storage solutions are capable of addressing this problem in dynamically-sharded storage environments.

Accordingly, this disclosure presents a solution for aligning data elements within blocks and shards on storage systems, thus simplifying the implementation of NDP functions in all cases. For example, the described solution enables applications-with limited knowledge of storage system policies-to pad and adjust data layouts before writing to a sharded storage system that does not rely on fixed shard sizes, thus enabling more efficient NDP and simpler programming models. With this solution, NDP becomes possible for a variety of storage platforms where data is striped/sharded, including solid-state drives (SSDs), SmartNICs, and storage servers, and so forth.

This solution leverages the following pieces of easily obtainable information before uploading an object to a storage system:
(i) the number of data shards (e.g., exclusive of parity shards in an erasure-coded environment);
(ii) the size of a potentially erasure-coded block; and
(iii) the maximum size of an uploadable "part" (e.g., when an object is uploaded in multiple parts using a multipart upload, such as an Amazon S3 multipart upload).

This information can be used to calculate where the block and shard boundaries lie, which gives the application enough information to align data elements within each shard and block. In some embodiments, this alignment information can be uploaded as distinct metadata or embedded in the object itself.

Accordingly, this solution broadens the applicability of NDP to generic sharded and erasure-coded storage system deployments. In this manner, NDP can be leveraged on a variety of hardware (e.g., servers, accelerators, SmartNICs)-regardless of the underlying storage environment-as storage systems continue to scale and NDP similarly grows in importance.

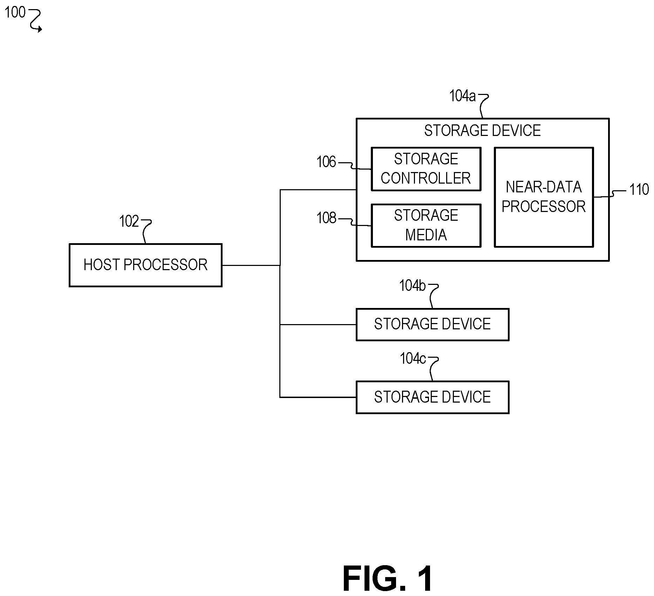

**FIG. 1** illustrates an example embodiment of a storage system 100 for performing near-data processing (NDP) on sharded data. In the illustrated embodiment, the storage system 100 includes a host processor 102 and multiple storage devices 104a-c. Each storage device 104a-c includes a storage controller 106, a storage media 108, and a near-data processor 110. For simplicity, only the components of storage device 104a are shown. When storing a data object, the storage system 100 aligns the data elements of the object within the boundaries of blocks, subblocks, and/or shards on the storage devices 104a-c. In this manner, compute operations can be performed on the data elements using the near-data processors 110 of the storage devices 104a-c without having to read and reconstruct individual data elements from multiple storage locations, as described further throughout this disclosure.

In general, an object may be any logically contiguous data unit, such as a file, dataset, Amazon S3 object, and so forth. Logically, an object is filled with a collection of data elements. A data element refers to the smallest unit of an object that can be logically worked with, processed, or operated on for a particular application or use case, such as a row of a CSV file, a video key frame plus deltas, individual words in a plaintext file, and so forth.

The goal of the described solution is to ensure that the data elements of an object do not cross block, subblock, or shard boundaries when the object is written to storage. In this manner, NDP techniques can be leveraged to operate on individual data elements without moving and/or reconstructing them.

For example, when an object is stored, the object may be comprised of one or more parts, and each part may be comprised of one or more blocks. Moreover, each part and its constituent blocks may be distributed across, or partitioned into, multiple shards. As an example, an object may be erasure coded across multiple data (e.g., plaintext) and parity shards, and the number of data (plaintext) shards is relevant to the embodiments described below. Finally, each portion of a block that resides within a single shard is referred to as a subblock.

In some embodiments, for example, a set of blocks is "sharded," meaning the blocks are horizontally partitioned into shards, such that each shard contains a portion of each block. This effectively partitions each block into subblocks, where each shard includes one subblock from some or all of the blocks. As a result, the storage system is organized into blocks, subblocks, and shards. Moreover, the size of the shards may scale with the number of blocks. For example, if additional blocks are written to the storage system, those blocks are similarly sharded such that subblocks of each new block are distributed across the existing shards. Further, the maximum block size, subblock size, and number of shards may be configurable and/or re-adjusted periodically (e.g., based on the characteristics of the underlying data objects/data elements and/or load/access patterns).

Moreover, in some embodiments, when data elements of an object are written to the storage system, padding is selectively added to ensure that each data element does not cross block, subblock, or shard boundaries. As a result, while the blocks, subblocks, and shards may have configurable sizes, the actual size and patterns of data stored on them may be irregular due to the alignment padding. However, by aligning each data element within block, subblock, and shard boundaries, a data element can be retrieved in-tact from a single location rather than having to read different portions of the data element from multiple locations and then reconstruct the data element from the constituent portions.

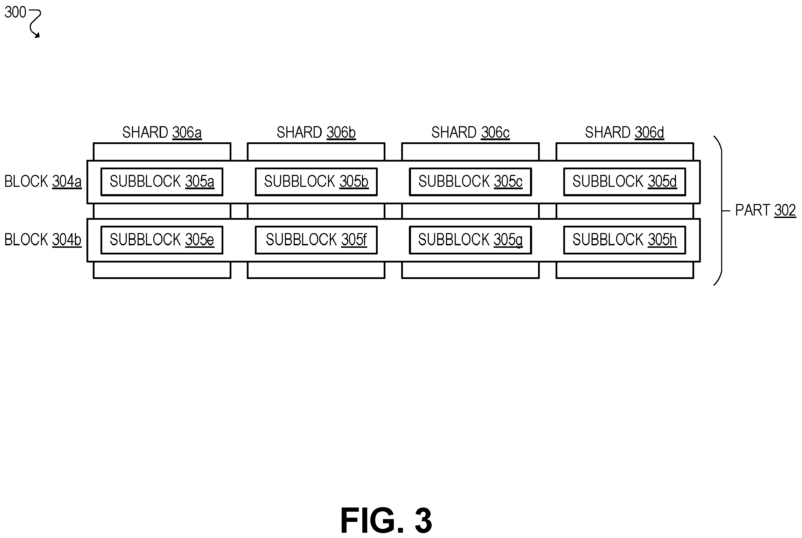

An example of an object 300 stored across multiple blocks and shards is shown in **FIG. 3**. In the illustrated example, the object 300 includes a single part 302, which is stored across two blocks 304a-b and four data shards 306a-d, thus resulting in four subblocks 305a-d, 305e-h within each block 304a-b.

In some cases, when a block does not evenly divide across the number of shards, one of its subblocks may have physical padding. For example, a block of size 82 bytes distributed across four shards would require subblocks of size 20.5 bytes. Since sub-byte granularities are typically unsupported, however, the subblocks must be of size 21. As a result, all subblocks will have a physical size of 21, but only three of the subblocks will have a logical size of 21 while the last subblock will have a logical size of 19. In other words, the last subblock only has 19 bytes with which to store data, and its remaining two bytes are padded out.

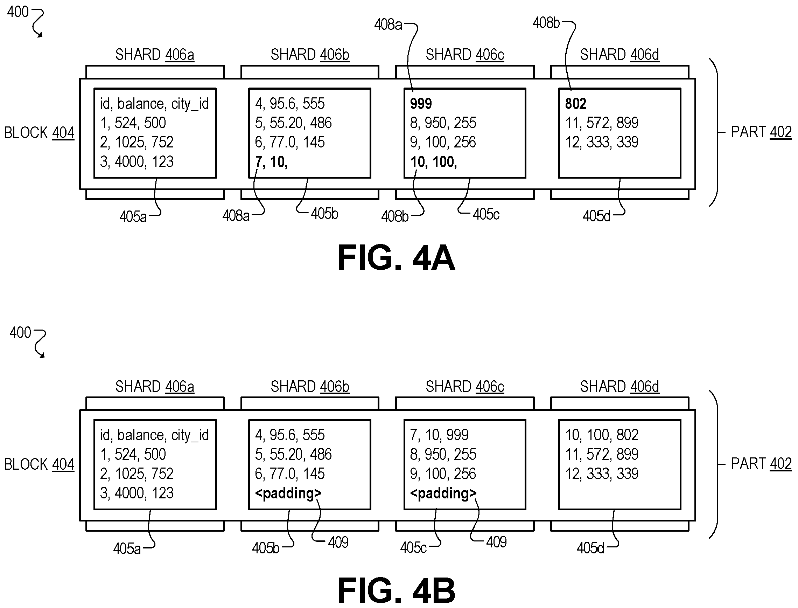

When writing an object to storage, the writing application does not necessarily need to be aware of the physical padding added to certain subblocks, but it does need to know accurate division points for each subblock in order to cleanly align the underlying data elements within the subblock boundaries. Thus, in some embodiments, the writing application first determines where the shard/subblock boundaries will occur based on (i) the number of shards, (ii) the size of the object, and (iii) the limits on block sizes. With this information, the writing application can then pack the data elements into shards using alignment padding to fill out any remaining space in each block and subblock, thus ensuring data element alignment. An example of this approach is shown in FIG. 4B.

**FIGS. 4A****-B** illustrate examples of an object 400 stored both without alignment padding (FIG. 4A) and with alignment padding (FIG. 4B). In the illustrated example, the object 400 includes CSV records as the underlying data elements, which are stored as a single part 402 in one block 404 across four data shards 406a-d, resulting in four subblocks 405a-d within the block 404.

As shown in FIG. 4A, when the object 400 is stored without alignment padding, some of the CSV records 408a-b straddle the boundary of adjacent shards 406b-d (and adjacent subblocks 405b-d). As a result, those shards 406b-d will have partial CSV records 408a-b that cannot be queried without gathering the remaining portions from their neighboring shards. In FIG. 4B, when the object 400 is stored with alignment padding 409, certain subblocks/shards 406b-c are padded 409 to prevent partial CSV records from straddling their boundaries, thus ensuring that all CSV records are aligned within the respective subblocks 405a-d and shards 406a-d.

At a high level, the process of storing an object with alignment padding involves performing a "first fit" of data elements into subblocks, and then using alignment padding to ensure the data elements do not cross boundaries. The most complex part of the process is at the "end" when there is not enough data to fill out a full block. In many storage systems, these last blocks are dynamically sized based on the input, which means there may not be enough space leftover to store the remaining data elements after padding has been added. As a result, the overall size of the object with padding must be estimated at the outset to ensure enough slack space is allocated to align the remaining data elements.

An example algorithm for storing an object with alignment padding is described below in four phases. The following pseudocode illustrates example functions for calculating block boundaries and generating layouts in connection with the algorithm described below:

```
 # nr data shards is the number of shards we're distributing over
 # blk sz is the maximum block size for calculating boundaries
 def calc block boundaries(nr_data_shards, blk sz)
  
   max_subblock_sz = math.ceil(blk_sz / nr_data_shards) # calculate
   max pad = (max_subblock_sz * nr_data_shards) - BLK_SZ
  
   logical_offsets = [] # Stores each sublock as a tuple
   cur_offset = 0
  
   # for first non-padded blocks
   for _ in range(nr_data_shards - 1):
      cur_range = (cur_offset, cur_offset + max_subblock_sz-1)
      #subblock tuple
      cur_offset += max_subblock_sz
      logical_offsets.append(cur_range)
  
   # for last padded block (end of a row)
   padded_sz = max_subblock_sz - pad
   last_range = (cur_offset, ((cur_offset+padded_sz)-1))
   logical_offsets.append(last_range)
  
   return logical_offsets
 # This will yield block-by-block sizes for a full part
 # return is a nested tuple
 # (partnum, block_id, [(start_offset, end_offset)...])
 def full_part_layout_generator(partnum ,nr_data_shards, max_part_sz,
 blk_sz):
   nr_full_blks = math.floor(max_part_sz/blk_sz) # how many totally
   full blocks in a part
  
   for blk_id in range(nr_full_blks):
      logoff, _ = calc_block_boundaries(nr_data_shards, blk_sz)
      yield(partnum, blk_id, logoff)
  
   blk_id = nr_full_blks
   logoff, _ =
   calc_partial_block_boundaries(nr_data_shards,last_blkid)
   yield(partnum, last_blkid, logoff)
```

In the first phase, various parameters required to calculate the block and subblock boundaries for the object are retrieved, such as the maximum part size, the maximum block size, and the number of data shards:
1. Retrieve maximum part size (max_part_sz). This may be large enough to encompass the entire object. This is usually fixed or defined in the user application.
2. Retrieve maximum block size (max_blk_sz). This is usually defined by the storage server or device as a constant.
3. Retrieve number of data shards (nr_data_shards). This is typically either a fixed policy set by the server, or may be set by the writing application depending on the storage system in use.

In the second phase, the data elements are written to full blocks and parts:
1. Calculate the remaining size of all data elements in the data element list (de_list) (e.g., the data in the object/file that is being padded and written to the storage system).
2. Get a layout generator using the full_part_layout_generator() function (e.g., which generates lists of block layouts).
3. For each block/subblock list from the layout generator:
   a. Check if the sum of the remaining data element sizes is less than the provided block, and if so, GOTO Phase 3.
   b. Create a buffer of the size of each subblock.
   c. Insert data elements into each buffer until no more complete elements can fit.
      i. These buffers can either be written immediately, or may be saved and batched, this will vary depending on the architecture of the storage system being written to and what it supports.
   d. Pad the rest of the buffer out with alignment padding (alignment_padding).
   e. Save the length of the buffer minus padding as subblock metadata.
   f. Recalculate the remaining size of all data elements (remaining_size).
4. When the generator produces no more block/subblock layouts, check if the remaining size is less than the maximum block size (remaining_size < max_blk_size).
   a. If it is, GOTO Phase 3.
   b. If not, GOTO step 2 of Phase 2 and continue writing data elements.

In the third phase, the last block is written. For example, once the remaining data elements are below the maximum block size, the next block that is written will be the last block. Since the last block is dynamically sized in many systems, however, the block size may need to be artificially inflated to ensure there is enough remaining space to pad and adjust the data element alignments.

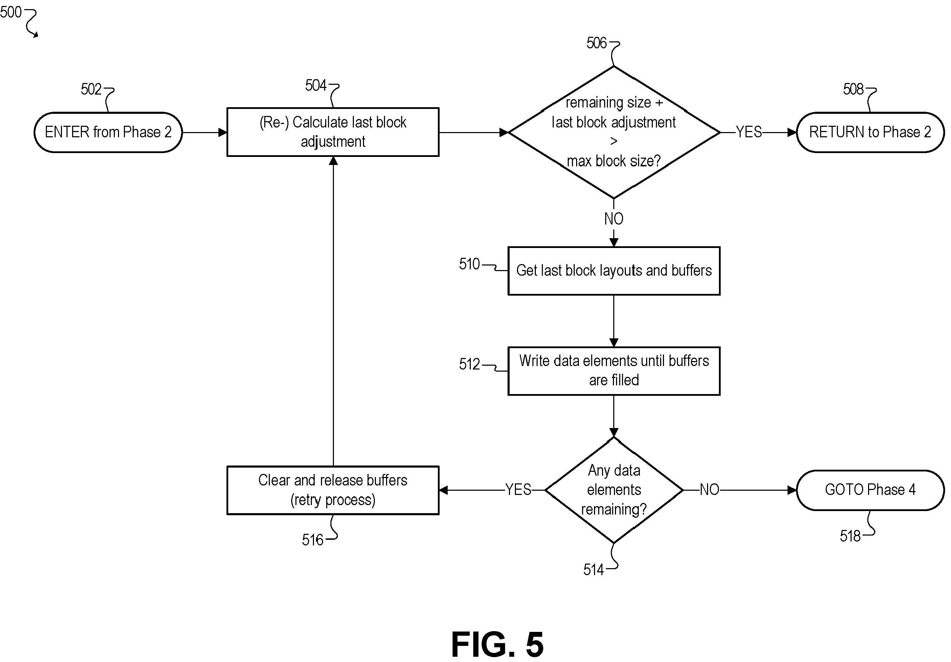

There are various approaches that can be used to adjust the size of the last block, one of which is shown in FIG. 5. In particular, **FIG. 5** illustrates an example process flow 500 for writing the remaining data elements of an object into the last block using a dynamically adjusted block size. In the illustrated example, process flow 500 includes the following steps:
1. Calculate the maximum data element size of the remaining data elements, and multiply this by the number of data shards to compute the last block adjustment (last_block_adjustment). This should provide enough slack space for an alignment even with large amounts of padding.
2. Calculate the last block size: remaining_size + last_block_adjustment
   a. If last_block_size > max_blk_sz, go back to Phase 2 with an adjusted remaining size (e.g., the maximum block size).
3. Get last block/subblock layouts from calc_block_boundaries(nr_data_shards, blk_sz). The block size argument is the last block size computed in the preceding step.
4. Attempt to write the remaining data elements, again ensuring that a data element is wholly contained inside each buffer for each subblock and that the length/offset up until the padding is stored as subblock metadata.
   a. If remaining data elements fit, GOTO Phase 4.
   b. Else update the calculated block size by the last_block_adjustment again, and GOTO step 2 of phase 3.

In the fourth phase, the subblock metadata is stored in-situ with the stored object. In this manner, computational storage (e.g., NDP) functions can identify where the valid data boundaries are within each subblock, and reading applications can strip the alignment padding back out of the subblocks when reading them from storage. Note that the physical alignment descriptions within each block have been omitted since they are implementation specific, but they can be calculated using the information that has already been obtained in connection with the above algorithm (e.g., object size, erasure coded block size, part size).

In some embodiments, the subblock metadata may be an ordered list of subblock tuples. Each subblock tuple has a block identifier (e.g., an integer which tells the order and position of the block), a subblock position (e.g., an integer which describes where in the block this subblock is) and a length (e.g., the length of all data elements not including alignment padding).

Further, in some embodiments, this approach may be implemented using a common feature of many object stores (e.g., S3, MinIO, Swift), which allows user metadata to be associated with an object. For example, the subblock metadata may first be compressed for efficiency, and the existing user-metadata infrastructure may then be used to store the metadata. A copy of this is stored along with each shard.

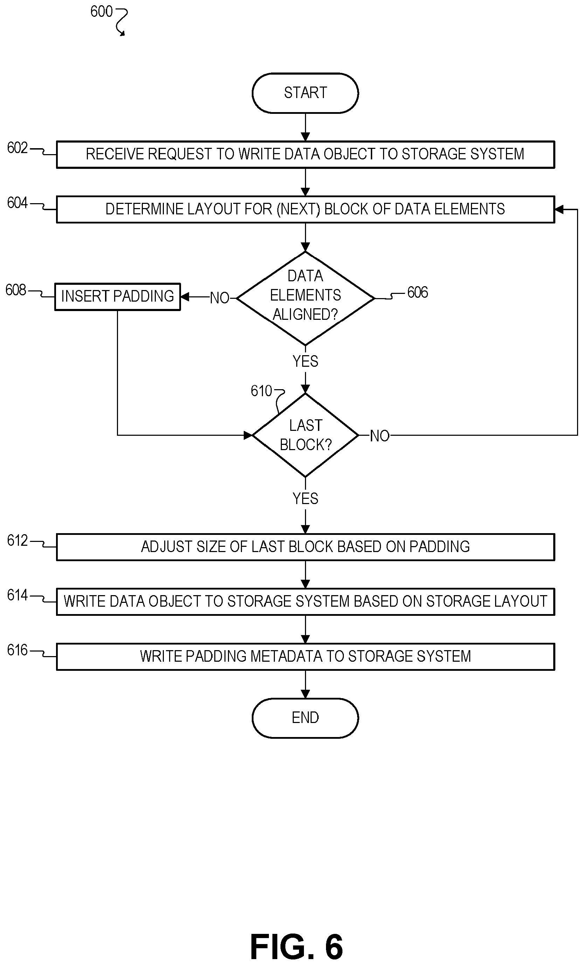

**FIG. 6** illustrates a flowchart 600 for writing a data object to a file system with alignment padding in accordance with certain embodiments. In some embodiments, for example, flowchart 600 may be performed by or using the example computing devices and systems described throughout this disclosure (e.g., an edge data storage appliance, a data storage server, etc.).

The flowchart begins at block 602 by receiving a request to write a data object to a storage system. The data object includes a set of data elements, such as a set of images, a set of CSV records, etc. The storage system is organized into blocks and shards, which are distributed across multiple storage devices in the system. For example, the blocks are collectively "sharded," meaning they are partitioned horizontally into shards. This effectively partitions each block into subblocks, where each shard includes one subblock from some or all of the blocks. As a result, the storage system is organized into blocks, subblocks, and shards.

The flowchart then cycles through blocks 604 - 612 to determine a storage layout for the data object. In particular, the storage layout arranges the set of data elements in the object across a set of blocks and shards (e.g., one or more blocks partitioned/sharded into multiple shards), and the storage layout is padded to align each data element within block, subblock, and shard boundaries. For example, the block, subblock, and shard boundaries for the data object may be determined based on the size of the data object, the number of (data) shards on the storage system, and the maximum block size supported on the storage system. In some embodiments, the storage layout also arranges the data object into multiple parts, where each part includes a different subset of the data elements in the object.

For example, the flowchart proceeds to block 604 to determine the layout for the first block of data elements. In particular, data elements in the object may be mapped (in order) to a block with the maximum block size until the block is full. The flowchart then proceeds to block 606 to determine if the data elements are aligned within the boundaries of the block, subblocks, and shards. If any data elements are straddling the boundaries, the flowchart proceeds to block 608 to insert padding in the block layout to align the data elements within the respective boundaries.

The flowchart then proceeds to block 610 to determine if this block is the last block. If this block is not the last block, the flowchart proceeds back to block 604 to determine the layout for the next block of data elements. If this is the last block, the flowchart proceeds to block 612 to adjust or inflate the block size to ensure the block is large enough for the remaining data elements and any padding. For example, since the last block may not be completely full of data elements, its block size may be smaller than the maximum block size. However, the block size of the last block needs to be adjusted or inflated to ensure there is enough room for the remaining data elements and any padding inserted for alignment purposes.

The flowchart then proceeds to block 614 to write the data object to the storage system based on the determined storage layout, and then to block 616 to write metadata for the data object to the storage system, which indicates the location of padding within the storage layout of the object.

At this point, the flowchart may be complete. In some embodiments, however, the flowchart may restart and/or certain blocks may be repeated. For example, in some embodiments, the flowchart may restart at block 602 to continue receiving and processing requests to write data objects to the storage system.

### Example Computing Embodiments

The following sections present examples of various computing embodiments that may be used to implement the data storage solution described throughout this disclosure. In particular, any of the devices, systems, or functionality described in the preceding sections may be implemented using the computing embodiments described below.

### Edge Computing

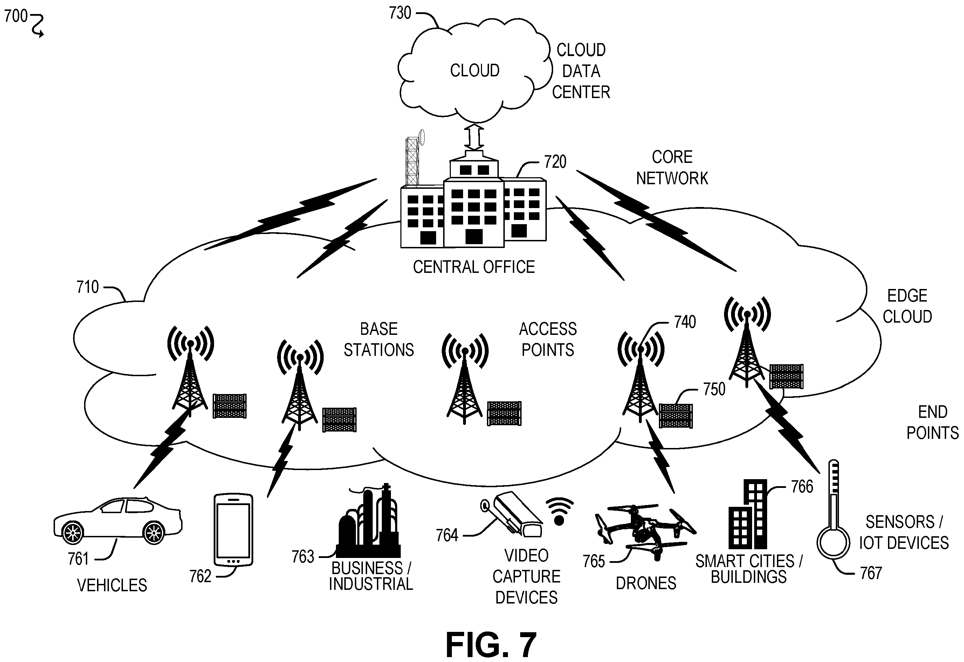

FIG. 7 is a block diagram 700 showing an overview of a configuration for edge computing, which includes a layer of processing referred to in many of the following examples as an "edge cloud". As shown, the edge cloud 710 is co-located at an edge location, such as an access point or base station 740, a local processing hub 750, or a central office 720, and thus may include multiple entities, devices, and equipment instances. The edge cloud 710 is located much closer to the endpoint (consumer and producer) data sources 760 (e.g., autonomous vehicles 761, user equipment 762, business and industrial equipment 763, video capture devices 764, drones 765, smart cities and building devices 766, sensors and loT devices 767, etc.) than the cloud data center 730. Compute, memory, and storage resources which are offered at the edges in the edge cloud 710 are critical to providing ultra-low latency response times for services and functions used by the endpoint data sources 760 as well as reduce network backhaul traffic from the edge cloud 710 toward cloud data center 730 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

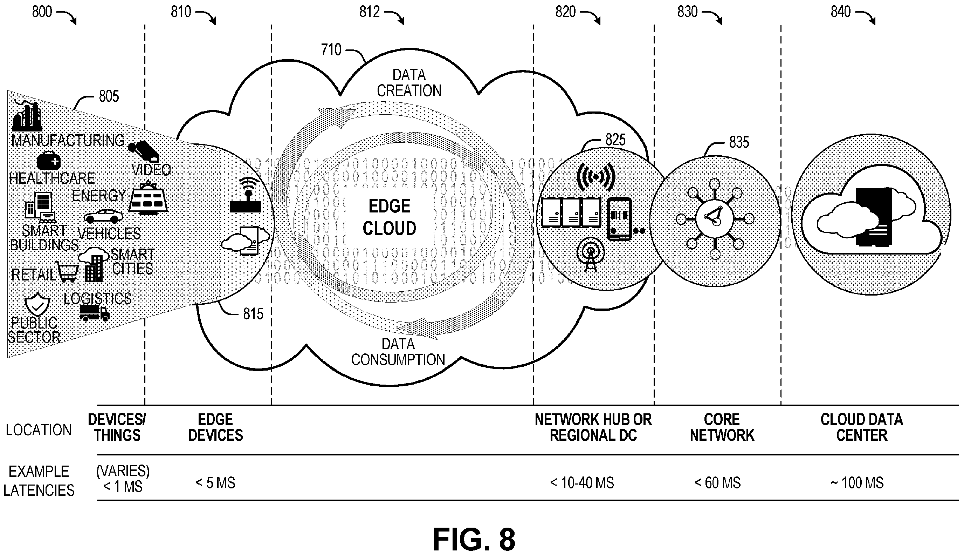

FIG. 8 illustrates operational layers among endpoints, an edge cloud, and cloud computing environments. Specifically, FIG. 8 depicts examples of computational use cases 805, utilizing the edge cloud 710 among multiple illustrative layers of network computing. The layers begin at an endpoint (devices and things) layer 800, which accesses the edge cloud 710 to conduct data creation, analysis, and data consumption activities. The edge cloud 710 may span multiple network layers, such as an edge devices layer 810 having gateways, on-premise servers, or network equipment (nodes 815) located in physically proximate edge systems; a network access layer 820, encompassing base stations, radio processing units, network hubs, regional data centers (DC), or local network equipment (equipment 825); and any equipment, devices, or nodes located therebetween (in layer 812, not illustrated in detail). The network communications within the edge cloud 710 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 800, under 5 ms at the edge devices layer 810, to even between 10 to 40 ms when communicating with nodes at the network access layer 820. Beyond the edge cloud 710 are core network 830 and cloud data center 840 layers, each with increasing latency (e.g., between 50-60 ms at the core network layer 830, to 100 or more ms at the cloud data center layer). As a result, operations at a core network data center 835 or a cloud data center 845, with latencies of at least 50 to 100 ms or more, will not be able to accomplish many time-critical functions of the use cases 805. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 835 or a cloud data center 845, a central office or content data network may be considered as being located within a "near edge" layer ("near" to the cloud, having high latency values when communicating with the devices and endpoints of the use cases 805), whereas an access point, base station, on-premise server, or network gateway may be considered as located within a "far edge" layer ("far" from the cloud, having low latency values when communicating with the devices and endpoints of the use cases 805). It will be understood that other categorizations of a particular network layer as constituting a "close", "local", "near", "middle", or "far" edge may be based on latency, distance, number of network hops, or other measurable characteristics, as measured from a source in any of the network layers 800-840.

The various use cases 805 may access resources under usage pressure from incoming streams, due to multiple services utilizing the edge cloud. To achieve results with low latency, the services executed within the edge cloud 710 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 710 may provide the ability to serve and respond to multiple applications of the use cases 805 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 710 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 710 (network layers 800-840), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 710.

As such, the edge cloud 710 is formed from network components and functional features operated by and within edge gateway nodes, edge aggregation nodes, or other edge compute nodes among network layers 810-830. The edge cloud 710 thus may be embodied as any type of network that provides edge computing and/or storage resources which are proximately located to radio access network (RAN) capable endpoint devices (e.g., mobile computing devices, loT devices, smart devices, etc.), which are discussed herein. In other words, the edge cloud 710 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

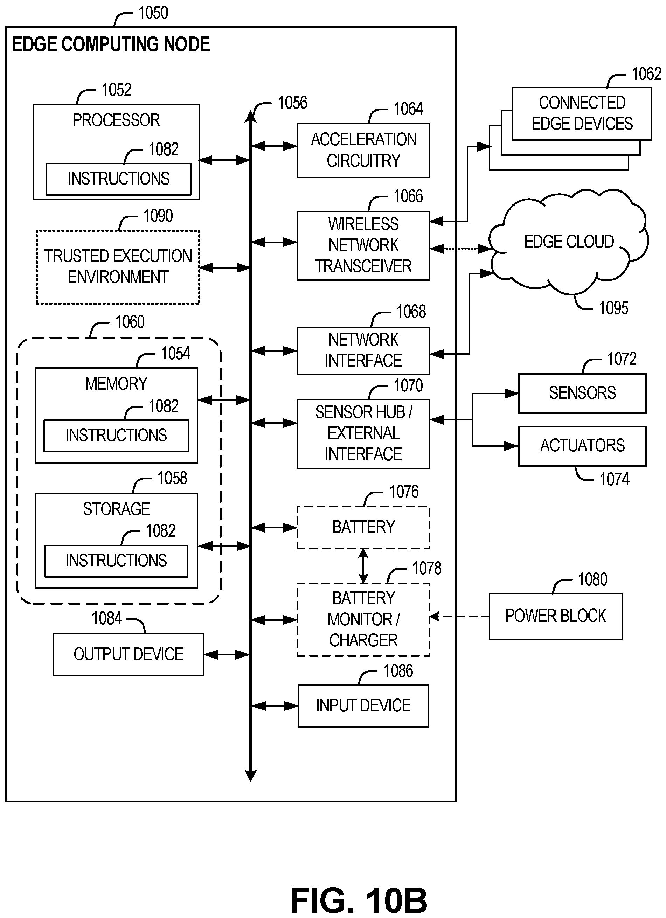

The network components of the edge cloud 710 may be servers, multi-tenant servers, appliance computing devices, and/or any other type of computing devices. For example, the edge cloud 710 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 10B. The edge cloud 710 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

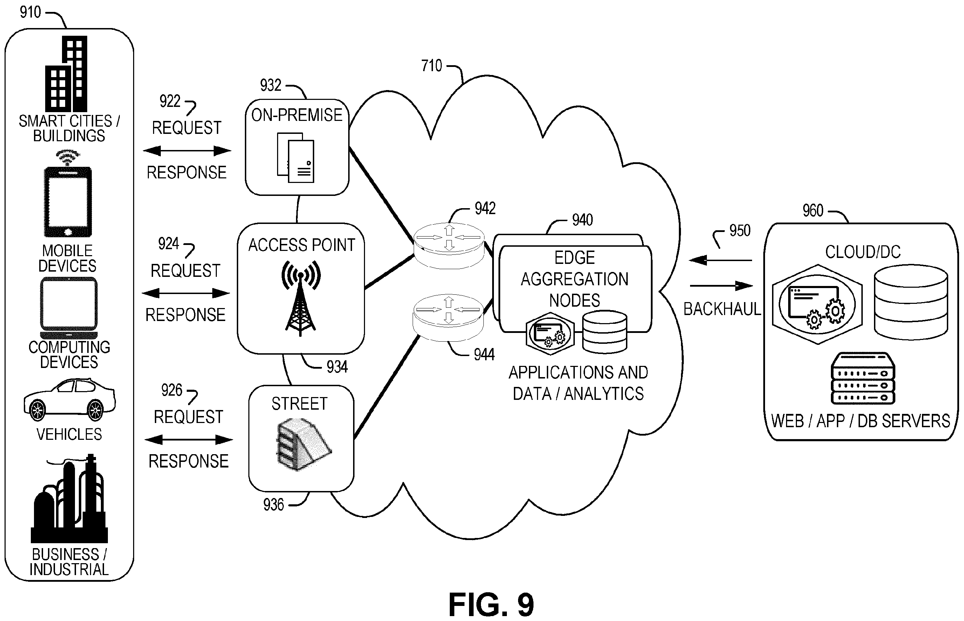

In FIG. 9, various client endpoints 910 (in the form of mobile devices, computers, autonomous vehicles, business computing equipment, industrial processing equipment) exchange requests and responses that are specific to the type of endpoint network aggregation. For instance, client endpoints 910 may obtain network access via a wired broadband network, by exchanging requests and responses 922 through an on-premise network system 932. Some client endpoints 910, such as mobile computing devices, may obtain network access via a wireless broadband network, by exchanging requests and responses 924 through an access point (e.g., cellular network tower) 934. Some client endpoints 910, such as autonomous vehicles may obtain network access for requests and responses 926 via a wireless vehicular network through a street-located network system 936. However, regardless of the type of network access, the TSP may deploy aggregation points 942, 944 within the edge cloud 710 to aggregate traffic and requests. Thus, within the edge cloud 710, the TSP may deploy various compute and storage resources, such as at edge aggregation nodes 940, to provide requested content. The edge aggregation nodes 940 and other systems of the edge cloud 710 are connected to a cloud or data center 960, which uses a backhaul network 950 to fulfill higher-latency requests from a cloud/data center for websites, applications, database servers, etc. Additional or consolidated instances of the edge aggregation nodes 940 and the aggregation points 942, 944, including those deployed on a single server framework, may also be present within the edge cloud 710 or other areas of the TSP infrastructure.

### Computing Devices and Systems

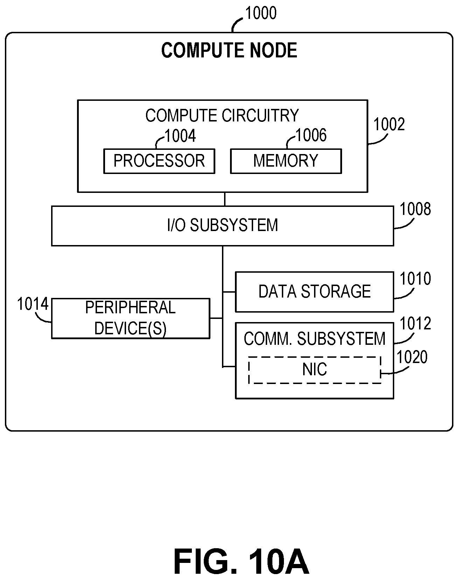

In further examples, any of the compute nodes or devices discussed with reference to the present edge computing systems and environment may be fulfilled based on the components depicted in FIGS. 10A and 10B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 10A, an edge compute node 1000 includes a compute engine (also referred to herein as "compute circuitry") 1002, an input/output (I/O) subsystem 1008, data storage 1010, a communication circuitry subsystem 1012, and, optionally, one or more peripheral devices 1014. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1000 may be embodied as any type of engine, device, or collection of devices capable of performing various compute functions. In some examples, the compute node 1000 may be embodied as a single device such as an integrated circuit, an embedded system, a field-programmable gate array (FPGA), a system-on-a-chip (SOC), or other integrated system or device. In the illustrative example, the compute node 1000 includes or is embodied as a processor 1004 and a memory 1006. The processor 1004 may be embodied as any type of processor capable of performing the functions described herein (e.g., executing an application). For example, the processor 1004 may be embodied as a multi-core processor(s), a microcontroller, a processing unit, a specialized or special purpose processing unit, or other processor or processing/controlling circuit.

In some examples, the processor 1004 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 1004 may work in coordination with each other to execute many types of operations and instructions within and on behalf of the compute node 1000.

The memory 1006 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 1006 may be integrated into the processor 1004. The memory 1006 may store various software and data used during operation such as one or more applications, data operated on by the application(s), libraries, and drivers.

The compute circuitry 1002 is communicatively coupled to other components of the compute node 1000 via the I/O subsystem 1008, which may be embodied as circuitry and/or components to facilitate input/output operations with the compute circuitry 1002 (e.g., with the processor 1004 and/or the main memory 1006) and other components of the compute circuitry 1002. For example, the I/O subsystem 1008 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1008 may form a portion of a system-on-a-chip (SoC) and be incorporated, along with one or more of the processor 1004, the memory 1006, and other components of the compute circuitry 1002, into the compute circuitry 1002.

The one or more illustrative data storage devices 1010 may be embodied as any type of devices configured for short-term or long-term storage of data such as, for example, memory devices and circuits, memory cards, hard disk drives, solid-state drives, or other data storage devices. Individual data storage devices 1010 may include a system partition that stores data and firmware code for the data storage device 1010. Individual data storage devices 1010 may also include one or more operating system partitions that store data files and executables for operating systems depending on, for example, the type of compute node 1000.

The communication circuitry 1012 may be embodied as any communication circuit, device, or collection thereof, capable of enabling communications over a network between the compute circuitry 1002 and another compute device (e.g., an edge gateway of an implementing edge computing system). The communication circuitry 1012 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a loT protocol such as IEEE 802.15.4 or ZigBee^{®}, low-power wide-area network (LPWAN) or low-power wide-area (LPWA) protocols, etc.) to effect such communication.

The illustrative communication circuitry 1012 includes a network interface controller (NIC) 1020, which may also be referred to as a host fabric interface (HFI). The NIC 1020 may be embodied as one or more add-in-boards, daughter cards, network interface cards, controller chips, chipsets, or other devices that may be used by the compute node 1000 to connect with another compute device (e.g., an edge gateway node). In some examples, the NIC 1020 may be embodied as part of a system-on-a-chip (SoC) that includes one or more processors, or included on a multichip package that also contains one or more processors. In some examples, the NIC 1020 may include a local processor (not shown) and/or a local memory (not shown) that are both local to the NIC 1020. In such examples, the local processor of the NIC 1020 may be capable of performing one or more of the functions of the compute circuitry 1002 described herein. Additionally, or alternatively, in such examples, the local memory of the NIC 1020 may be integrated into one or more components of the client compute node at the board level, socket level, chip level, and/or other levels.

Additionally, in some examples, a respective compute node 1000 may include one or more peripheral devices 1014. Such peripheral devices 1014 may include any type of peripheral device found in a compute device or server such as audio input devices, a display, other input/output devices, interface devices, and/or other peripheral devices, depending on the particular type of the compute node 1000. In further examples, the compute node 1000 may be embodied by a respective edge compute node (whether a client, gateway, or aggregation node) in an edge computing system or like forms of appliances, computers, subsystems, circuitry, or other components.

In a more detailed example, FIG. 10B illustrates a block diagram of an example of components that may be present in an edge computing node 1050 for implementing the techniques (e.g., operations, processes, methods, and methodologies) described herein. This edge computing node 1050 provides a closer view of the respective components of node 1000 when implemented as or as part of a computing device (e.g., as a mobile device, a base station, server, gateway, etc.). The edge computing node 1050 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 1050, or as components otherwise incorporated within a chassis of a larger system.

The edge computing device 1050 may include processing circuitry in the form of a processor 1052, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1052 may be a part of a system on a chip (SoC) in which the processor 1052 and other components are formed into a single integrated circuit, or a single package, such as the Edison^{™} or Galileo^{™} SoC boards from Intel Corporation, Santa Clara, California. As an example, the processor 1052 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1052 and accompanying circuitry may be provided in a single socket form factor, multiple socket form factor, or a variety of other formats, including in limited hardware configurations or configurations that include fewer than all elements shown in FIG. 10B.

The processor 1052 may communicate with a system memory 1054 over an interconnect 1056 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1058 may also couple to the processor 1052 via the interconnect 1056. In an example, the storage 1058 may be implemented via a solid-state disk drive (SSDD). Other devices that may be used for the storage 1058 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1058 may be on-die memory or registers associated with the processor 1052. However, in some examples, the storage 1058 may be implemented using a micro hard disk drive (HDD). Further, any number of new technologies may be used for the storage 1058 in addition to, or instead of, the technologies described, such resistance change memories, phase change memories, holographic memories, or chemical memories, among others.

The components may communicate over the interconnect 1056. The interconnect 1056 may include any number of technologies, including industry standard architecture (ISA), extended ISA (EISA), peripheral component interconnect (PCI), peripheral component interconnect extended (PCIx), PCI express (PCIe), or any number of other technologies. The interconnect 1056 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1056 may couple the processor 1052 to a transceiver 1066, for communications with the connected edge devices 1062. The transceiver 1066 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1062. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1066 (or multiple transceivers) may communicate using multiple standards or radios for communications at a different range. For example, the edge computing node 1050 may communicate with close devices, e.g., within about 10 meters, using a local transceiver based on Bluetooth Low Energy (BLE), or another low power radio, to save power. More distant connected edge devices 1062, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1066 (e.g., a radio transceiver) may be included to communicate with devices or services in a cloud (e.g., an edge cloud 1095) via local or wide area network protocols. The wireless network transceiver 1066 may be a low-power wide-area (LPWA) transceiver that follows the IEEE 802.15.4, or IEEE 802.15.4g standards, among others. The edge computing node 1050 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1066, as described herein. For example, the transceiver 1066 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1066 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1068 may be included to provide a wired communication to nodes of the edge cloud 1095 or to other devices, such as the connected edge devices 1062 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1068 may be included to enable connecting to a second network, for example, a first NIC 1068 providing communications to the cloud over Ethernet, and a second NIC 1068 providing communications to other devices over another type of network.

Given the variety of types of applicable communications from the device to another component or network, applicable communications circuitry used by the device may include or be embodied by any one or more of components 1064, 1066, 1068, or 1070. Accordingly, in various examples, applicable means for communicating (e.g., receiving, transmitting, etc.) may be embodied by such communications circuitry.

The edge computing node 1050 may include or be coupled to acceleration circuitry 1064, which may be embodied by one or more artificial intelligence (Al) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1056 may couple the processor 1052 to a sensor hub or external interface 1070 that is used to connect additional devices or subsystems. The devices may include sensors 1072, such as accelerometers, level sensors, flow sensors, optical light sensors, camera sensors, temperature sensors, global navigation system (e.g., GPS) sensors, pressure sensors, barometric pressure sensors, and the like. The hub or interface 1070 further may be used to connect the edge computing node 1050 to actuators 1074, such as power switches, valve actuators, an audible sound generator, a visual warning device, and the like.

In some optional examples, various input/output (I/O) devices may be present within or connected to, the edge computing node 1050. For example, a display or other output device 1084 may be included to show information, such as sensor readings or actuator position. An input device 1086, such as a touch screen or keypad may be included to accept input. An output device 1084 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 1050. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1076 may power the edge computing node 1050, although, in examples in which the edge computing node 1050 is mounted in a fixed location, it may have a power supply coupled to an electrical grid, or the battery may be used as a backup or for temporary capabilities. The battery 1076 may be a lithium ion battery, or a metal-air battery, such as a zinc-air battery, an aluminum-air battery, a lithium-air battery, and the like.

A battery monitor/charger 1078 may be included in the edge computing node 1050 to track the state of charge (SoCh) of the battery 1076, if included. The battery monitor/charger 1078 may be used to monitor other parameters of the battery 1076 to provide failure predictions, such as the state of health (SoH) and the state of function (SoF) of the battery 1076. The battery monitor/charger 1078 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1078 may communicate the information on the battery 1076 to the processor 1052 over the interconnect 1056. The battery monitor/charger 1078 may also include an analog-to-digital (ADC) converter that enables the processor 1052 to directly monitor the voltage of the battery 1076 or the current flow from the battery 1076. The battery parameters may be used to determine actions that the edge computing node 1050 may perform, such as transmission frequency, mesh network operation, sensing frequency, and the like.

A power block 1080, or other power supply coupled to a grid, may be coupled with the battery monitor/charger 1078 to charge the battery 1076. In some examples, the power block 1080 may be replaced with a wireless power receiver to obtain the power wirelessly, for example, through a loop antenna in the edge computing node 1050. A wireless battery charging circuit, such as an LTC4020 chip from Linear Technologies of Milpitas, California, among others, may be included in the battery monitor/charger 1078. The specific charging circuits may be selected based on the size of the battery 1076, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1058 may include instructions 1082 in the form of software, firmware, or hardware commands to implement the techniques described herein. Although such instructions 1082 are shown as code blocks included in the memory 1054 and the storage 1058, it may be understood that any of the code blocks may be replaced with hardwired circuits, for example, built into an application specific integrated circuit (ASIC).

In an example, the instructions 1082 provided via the memory 1054, the storage 1058, or the processor 1052 may be embodied as a non-transitory, machine-readable medium 1060 including code to direct the processor 1052 to perform electronic operations in the edge computing node 1050. The processor 1052 may access the non-transitory, machine-readable medium 1060 over the interconnect 1056. For instance, the non-transitory, machine-readable medium 1060 may be embodied by devices described for the storage 1058 or may include specific storage units such as optical disks, flash drives, or any number of other hardware devices. The non-transitory, machine-readable medium 1060 may include instructions to direct the processor 1052 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 1082 on the processor 1052 (separately, or in combination with the instructions 1082 of the machine readable medium 1060) may configure execution or operation of a trusted execution environment (TEE) 1090. In an example, the TEE 1090 operates as a protected area accessible to the processor 1052 for secure execution of instructions and secure access to data. Various implementations of the TEE 1090, and an accompanying secure area in the processor 1052 or the memory 1054 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1050 through the TEE 1090 and the processor 1052.

### Machine-Readable Medium and Distributed Software Instructions

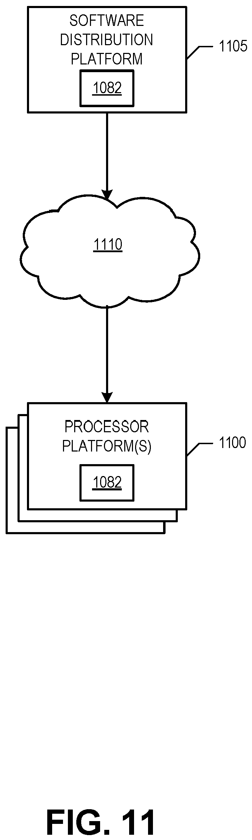

FIG. 11 illustrates an example software distribution platform 1105 to distribute software, such as the example computer readable instructions 1082 of FIG. 10B, to one or more devices, such as example processor platform(s) 1100 and/or example connected edge devices, gateways, and/or sensors described throughout this disclosure. The example software distribution platform 1105 may be implemented by any computer server, data facility, cloud service, etc., capable of storing and transmitting software to other computing devices (e.g., third parties, example connected edge devices described throughout this disclosure). Example connected edge devices may be customers, clients, managing devices (e.g., servers), third parties (e.g., customers of an entity owning and/or operating the software distribution platform 1105). Example connected edge devices may operate in commercial and/or home automation environments. In some examples, a third party is a developer, a seller, and/or a licensor of software such as the example computer readable instructions 1082 of FIG. 10B. The third parties may be consumers, users, retailers, OEMs, etc. that purchase and/or license the software for use and/or re-sale and/or sub-licensing. In some examples, distributed software causes display of one or more user interfaces (Uls) and/or graphical user interfaces (GUIs) to identify the one or more devices (e.g., connected edge devices) geographically and/or logically separated from each other (e.g., physically separated loT devices chartered with the responsibility of water distribution control (e.g., pumps), electricity distribution control (e.g., relays), etc.).

In the illustrated example of FIG. 11, the software distribution platform 1105 includes one or more servers and one or more storage devices. The storage devices store the computer readable instructions 1082. The one or more servers of the example software distribution platform 1105 are in communication with a network 1110, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1082 from the software distribution platform 1105. For example, the software, which may correspond to the example computer readable instructions described throughout this disclosure, may be downloaded to the example processor platform(s) 1100 (e.g., example connected edge devices), which is/are to execute the computer readable instructions 1082 to implement the functionality described throughout this disclosure. In some examples, one or more servers of the software distribution platform 1105 are communicatively connected to one or more security domains and/or security devices through which requests and transmissions of the example computer readable instructions 1082 must pass. In some examples, one or more servers of the software distribution platform 1105 periodically offer, transmit, and/or force updates to the software (e.g., the example computer readable instructions 1082 of FIG. 10B) to ensure improvements, patches, updates, etc. are distributed and applied to the software at the end user devices.

In the illustrated example of FIG. 11, the computer readable instructions 1082 are stored on storage devices of the software distribution platform 1105 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 1082 stored in the software distribution platform 1105 are in a first format when transmitted to the example processor platform(s) 1100. In some examples, the first format is an executable binary in which particular types of the processor platform(s) 1100 can execute. However, in some examples, the first format is uncompiled code that requires one or more preparation tasks to transform the first format to a second format to enable execution on the example processor platform(s) 1100. For instance, the receiving processor platform(s) 1100 may need to compile the computer readable instructions 1082 in the first format to generate executable code in a second format that is capable of being executed on the processor platform(s) 1100. In still other examples, the first format is interpreted code that, upon reaching the processor platform(s) 1100, is interpreted by an interpreter to facilitate execution of instructions.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

### Examples

Illustrative examples of the technologies described throughout this disclosure are provided below. Embodiments of these technologies may include any one or more, and any combination of, the examples described below. In some embodiments, at least one of the systems or components set forth in one or more of the preceding figures may be configured to perform one or more operations, techniques, processes, and/or methods as set forth in the following examples.

Example 1 includes a device, comprising: interface circuitry to communicate with a plurality of storage devices; and processing circuitry to: receive a request to write a data object to a storage system, wherein the data object comprises a set of data elements, and wherein the storage system is organized into blocks and shards, wherein the blocks and the shards are distributed across the plurality of storage devices; determine a storage layout for the data object, wherein the storage layout arranges the set of data elements across a set of blocks and shards, and wherein the storage layout is padded to align each data element within block and shard boundaries; and write, via the interface circuitry, the data object to the storage system based on the storage layout.

Example 2 includes the device of Example 1, wherein the set of blocks and shards comprises one or more blocks and a plurality of shards.

Example 3 includes the device of Example 2, wherein: the one or more blocks are partitioned into subblocks, and wherein the plurality of shards each comprise a subblock from at least some of the one or more blocks; and the storage layout is padded to align each data element within subblock boundaries.

Example 4 includes the device of any of Examples 1-3, wherein the processing circuitry to write, via the interface circuitry, the data object to the storage system based on the storage layout is further to: write metadata associated with the data object to the storage system, wherein the metadata indicates a location of padding within the storage layout of the data object.

Example 5 includes the device of any of Examples 1-4, wherein the set of data elements comprises a set of images, wherein each image is aligned within the block and shard boundaries.

Example 6 includes the device of any of Examples 1-5, wherein the processing circuitry to determine the storage layout for the data object is further to: determine the block and shard boundaries for the data object, wherein the block and shard boundaries are determined based on: a size of the data object; a number of shards on the storage system; and a maximum block size on the storage system.

Example 7 includes the device of Example 6, wherein the processing circuitry to determine the storage layout for the data object is further to: determine a size for a last block of the data object, wherein the size for the last block is less than the maximum block size, and wherein the size for the last block is inflated based on padding inserted in the storage layout.

Example 8 includes the device of any of Examples 1-7, wherein the storage layout further arranges the data object into a plurality of parts, wherein each part comprises a different subset of the set of data elements.

Example 9 includes the device of any of Examples 1-8, wherein the device is: a data storage server; an edge data storage appliance; or an edge cloud server.

Example 10 includes at least one non-transitory machine-readable storage medium having instructions stored thereon, wherein the instructions, when executed on processing circuitry, cause the processing circuitry to: receive a request to write a data object to a storage system, wherein the data object comprises a set of data elements, and wherein the storage system is organized into blocks and shards, wherein the blocks and the shards are distributed across a plurality of storage devices; determine a storage layout for the data object, wherein the storage layout arranges the set of data elements across a set of blocks and shards, and wherein the storage layout is padded to align each data element within block and shard boundaries; and write the data object to the storage system based on the storage layout.

Example 11 includes the storage medium of Example 10, wherein the set of blocks and shards comprises one or more blocks and a plurality of shards.

Example 12 includes the storage medium of Example 11, wherein: the one or more blocks are partitioned into subblocks, and wherein the plurality of shards each comprise a subblock from at least some of the one or more blocks; and the storage layout is padded to align each data element within subblock boundaries.

Example 13 includes the storage medium of any of Examples 10-12, wherein the instructions that cause the processing circuitry to write the data object to the storage system based on the storage layout further cause the processing circuitry to: write metadata associated with the data object to the storage system, wherein the metadata indicates a location of padding within the storage layout of the data object.

Example 14 includes the storage medium of any of Examples 10-13, wherein the set of data elements comprises a set of images, wherein each image is aligned within the block and shard boundaries.

Example 15 includes the storage medium of any of Examples 10-14, wherein the instructions that cause the processing circuitry to determine the storage layout for the data object further cause the processing circuitry to: determine the block and shard boundaries for the data object, wherein the block and shard boundaries are determined based on: a size of the data object; a number of shards on the storage system; and a maximum block size on the storage system.

Example 16 includes the storage medium of Example 15, wherein the instructions that cause the processing circuitry to determine the storage layout for the data object further cause the processing circuitry to: determine a size for a last block of the data object, wherein the size for the last block is less than the maximum block size, and wherein the size for the last block is inflated based on padding inserted in the storage layout.

Example 17 includes the storage medium of any of Examples 10-16, wherein the storage layout further arranges the data object into a plurality of parts, wherein each part comprises a different subset of the set of data elements.

Example 18 includes a method, comprising: receiving a request to write a data object to a storage system, wherein the data object comprises a set of data elements, and wherein the storage system is organized into blocks and shards, wherein the blocks and the shards are distributed across a plurality of storage devices; determining a storage layout for the data object, wherein the storage layout arranges the set of data elements across a set of blocks and shards, and wherein the storage layout is padded to align each data element within block and shard boundaries; and writing the data object to the storage system based on the storage layout.

Example 19 includes the method of Example 18, wherein: the set of blocks and shards comprises one or more blocks and a plurality of shards, wherein the one or more blocks are partitioned into subblocks, and wherein the plurality of shards each comprise a subblock from at least some of the one or more blocks; and the storage layout is padded to align each data element within subblock boundaries.

Example 20 includes the method of any of Examples 18-19, further comprising: writing metadata associated with the data object to the storage system, wherein the metadata indicates a location of padding within the storage layout of the data object.

Example 21 includes the method of any of Examples 18-20, wherein the set of data elements comprises a set of images, wherein each image is aligned within the block and shard boundaries.

Example 22 includes the method of any of Examples 18-21, wherein determining the storage layout for the data object comprises: determining the block and shard boundaries for the data object, wherein the block and shard boundaries are determined based on: a size of the data object; a number of shards on the storage system; and a maximum block size on the storage system; and determining a size for a last block of the data object, wherein the size for the last block is less than the maximum block size, and wherein the size for the last block is inflated based on padding inserted in the storage layout.

Example 23 includes a system, comprising: a plurality of storage devices; and a data storage server to: receive a request to write a data object to a storage system, wherein the data object comprises a set of data elements, and wherein the storage system is organized into blocks and shards, wherein the blocks and the shards are distributed across the plurality of storage devices; determine a storage layout for the data object, wherein the storage layout arranges the set of data elements across a set of blocks and shards, and wherein the storage layout is padded to align each data element within block and shard boundaries; and write the data object to the storage system based on the storage layout.

Example 24 includes the system of Example 23, wherein the set of data elements comprises a set of images, wherein each image is aligned within the block and shard boundaries.

Example 25 includes the system of any of Examples 23-24, wherein the data storage server to determine the storage layout for the data object is further to: determine the block and shard boundaries for the data object, wherein the block and shard boundaries are determined based on: a size of the data object; a number of shards on the storage system; and a maximum block size on the storage system; and determine a size for a last block of the data object, wherein the size for the last block is less than the maximum block size, and wherein the size for the last block is inflated based on padding inserted in the storage layout.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

## Claims

1. A method, comprising:
receiving a request to write a data object to a storage system, wherein the data object comprises a set of data elements, and wherein the storage system is organized into blocks and shards, wherein the blocks and the shards are distributed across a plurality of storage devices;
determining a storage layout for the data object, wherein the storage layout arranges the set of data elements across a set of blocks and shards, and wherein the storage layout is padded to align each data element within block and shard boundaries; and
writing the data object to the storage system based on the storage layout.

2. The method of Claim 1, wherein the set of blocks and shards comprises one or more blocks and a plurality of shards.

3. The method of Claim 2, wherein:
the one or more blocks are partitioned into subblocks, and wherein the plurality of shards each comprise a subblock from at least some of the one or more blocks; and
the storage layout is padded to align each data element within subblock boundaries.

4. The method of any of Claims 1-3, further comprising:
writing metadata associated with the data object to the storage system, wherein the metadata indicates a location of padding within the storage layout of the data object.

5. The method of any of Claims 1-4, wherein the set of data elements comprises a set of images, wherein each image is aligned within the block and shard boundaries.

6. The method of any of Claims 1-5, wherein determining the storage layout for the data object comprises:
determining the block and shard boundaries for the data object, wherein the block and shard boundaries are determined based on:
a size of the data object;
a number of shards on the storage system; and
a maximum block size on the storage system.

7. The method of Claim 6, wherein determining the storage layout for the data object comprises:
determining a size for a last block of the data object, wherein the size for the last block is less than the maximum block size, and wherein the size for the last block is inflated based on padding inserted in the storage layout.

8. The method of any of Claims 1-7, wherein the storage layout further arranges the data object into a plurality of parts, wherein each part comprises a different subset of the set of data elements.

9. The method of any of Claims 1-8, wherein the method is performed by:
a data storage server;
an edge data storage appliance; or
an edge cloud server.

10. An apparatus comprising means to perform a method as claimed in any preceding claim.

11. At least one machine accessible storage medium having instructions stored thereon, the instructions when executed on a machine, cause the machine to perform a method or realize an apparatus as claimed in any preceding claim.
